Europäisches Patentamt

European Patent Office

Office européen des brevets

(11) Publication number: **0 353 207**
**A2**

# (12) EUROPEAN PATENT APPLICATION

(21) Application number: 89830339.1

(22) Date of filing: 20.07.89

(51) Int. Cl.⁵: **A 61 C 1/00**

(30) Priority: 26.07.88 IT 355188

(43) Date of publication of application:
**31.01.90 Bulletin 90/05**

(84) Designated Contracting States:
**CH DE ES FR GB GR IT LI SE**

(71) Applicant: **CASTELLINI S.p.A.**
**Via Saliceto, 22**
**I-40013 Castelmaggiore (Bologna) (IT)**

(72) Inventor: **Sacchetti, Enzo**
**Via Toscana 12/2**
**I-40141 Bologna (IT)**

**Pignattini, Giorgio**
**Via Ranzani 5/A**
**I-40127 Bologna (IT)**

**Lenzi, Plinio Maria**
**Via L. Spada, 47**
**I-40129 Bologna (IT)**

(74) Representative: **Lanzoni, Luciano**
**c/o BUGNION S.p.A. Via Farini, 37**
**I-40124 Bologna (IT)**

(54) **A device for supplying a disinfectant and/or cleansing fluid automatically and continuously to the water outlets of dental surgery apparatus.**

(57) The device comprises a system by which disinfectant and/or cleansers in fluid or solid form can be dispensed to each outlet (1) continuously, in such a way as to emerge together with the water at the relative spout. The fluid type is dispensed from a tank (2), whereas the solid preparation takes the form of a slow-dissolving tablet (14) encapsulated in a container (12) that can be fitted into the water supply line (11) serving the outlet (1).

FIG 1

## Description

## A device for supplying a disinfectant and/or cleansing fluid automatically and continuously to the water outlets of dental surgery apparatus

The present invention relates to a device designed for association with the water outlets of medical, and in particular dental surgery apparatus, and serving to dispense a disinfectant and/or cleansing fluid into the water automatically and continuously (for the purposes of the disclosure, "disinfection" also embraces the fuller process of sterilization, given that these two operations differ solely in terms of duration, and of the quantity of cleanser utilized).

Conventionally, disinfection (or sterilization) of the spittoon cup of dental surgery apparatus is effected manually on an occasional basis, simply by wiping over with a swab soaked in suitable liquid disinfectant.

Clearly, the effectiveness of such a method must be limited in the long term, especially when one considers that the spittoon is swilled continually with water only, and while being kept as clean as possible, is not properly disinfected. Thus, if a comparison is drawn between the duration of each such disinfection and the length of time the cup remains in use, disinfection is substantially never achieved.

Given the current state of the art, the only remedy effectively available remains that of disinfecting and cleaning the cup between patients, though this would be quite unthinkable in practice for obvious reasons of time.

Dental surgery apparatus also incorporates a stand, or recess, alongside the spittoon cup, serving to accommodate a drinking glass for the patient's oral rinse; the glass is replenished from a water spout, or outlet, positioned directly above its open top. The operation of replenishing the glass is effected either by the surgeon or by an assistant; at all events, that which emerges from the spout is water, no more and no less. Accordingly, where there may be a need for a disinfectant or medicinal rinse, the water in the glass must be supplemented with a suitable liquid or solid (a slow-dissolving tablet in most instances), added separately.

The object of the present invention is to provide a device that will permit of exposing the spittoon cup and/or the rinse drinking glass automatically and continuously to a disinfectant and/or cleansing fluid, supplemented with medicinal substances where appropriate.

In more general terms, the object of the invention is to provide a device of the aforementioned type that can be associated with any given water outlet forming part of a dental surgery apparatus.

The stated objects are realized with a device as characterized in the appended claims; for each water outlet or group of outlets, such a device comprises a tank containing disinfectant and/or cleansing fluid, a pipeline connectable to the outlet, means for dispensing the fluid from the tank into the pipeline, and means by which to operate the dispensing means together with the water outlet. Alternatively, a solid disinfectant or cleanser can be used, in which case the tank and pipeline are not required.

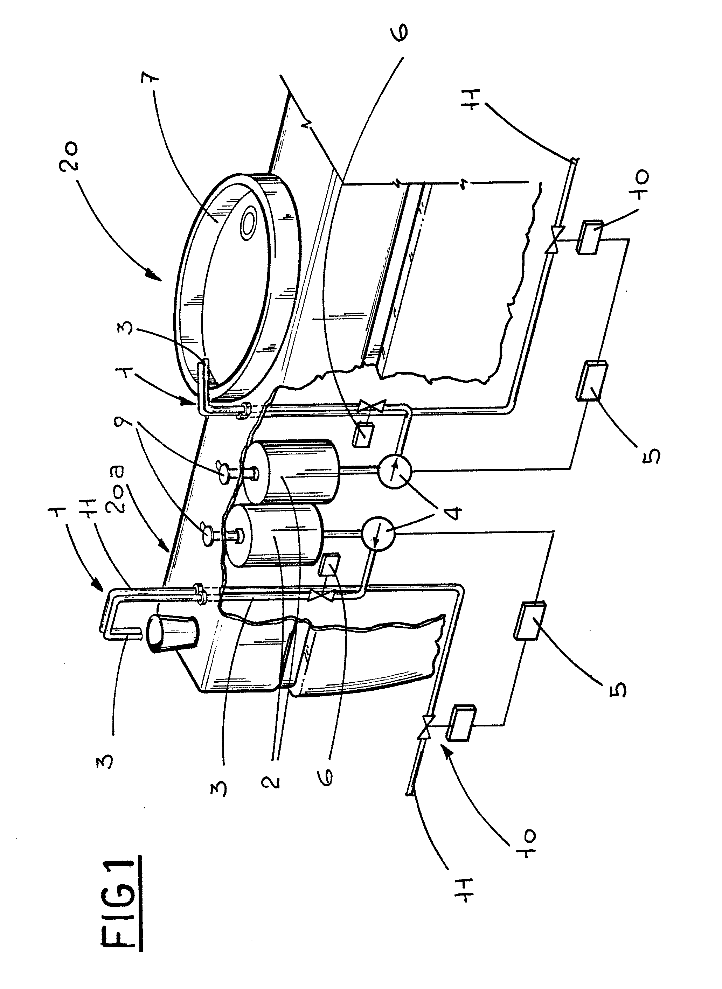

The invention will now be described in detail, by way of example, with the aid of the accompanying drawings, in which: fig 1 is a perspective with certain parts cut away better to reveal others, showing the device in a first embodiment and associated with the part of a dental surgery apparatus incorporating the spittoon cup and drinking glass stand;

fig 2 is a perspective of the device of fig 1 in an alternative embodiment, viewed with certain parts cut away better to reveal others;

fig 3 shows a detail of the operating means of the device in fig 1;

fig 4 shows another perspective of the device, seen in a further embodiment;

fig 5 is a perspective of the device of fig 4 in an alternative embodiment, viewed with certain parts cut away better to reveal others.

fig 6 is the sectional illustration of a detail of the container of a solid preparation, as in fig 4;

fig 7 is a smaller scale perspective of the device in an embodiment combining the features illustrated in figs 2 and 5, viewed with certain parts cut away better to reveal others.

Referring to fig 1, it will be observed that one device is provided for each water outlet 1 carried by an arm 20a of the apparatus, denoted 20 in its entirety: one device serving the spittoon cup 7 and one serving the oral rinse drinking glass 8. Each such device is provided with means for the supply of a disinfectant and/or cleansing agent to the outlet, comprising:

-a tank 2 containing disinfectant and/or cleansing fluid;

-a pipeline 3 through which the disinfectant and/or cleansing fluid is dispensed;

-means 4 by which to dispense the disinfectant and/or cleansing fluid from the tank 2 into the pipeline 3;

-means 5 by which to operate the dispensing means 4 together with the relative outlet 1.

The tanks 2 will be housed to best advantage in the arm 20a of the apparatus, the top surface of which affords two holes by way of which to replenish the supply of fluid; the holes are closed by removable stoppers 9 when not in use. Alternatively, the tank could be the selfsame container (e.g. a bottle) in which a proprietary disinfectant and/or cleanser is purchased.

Each pipeline 3 runs substantially from the base of the relative tank 2, connected permanently thereto, or in the case of the replaceable bottle, connected removably to the neck by way of a special fitting. The pipeline 3 might be totally independent of the respective outlet 1, terminating at least with its endmost section in the same location as that of the outlet 1, as shown in fig 1, where the disinfectant pipeline 3 and the water line 11 to the outlet 1 are disposed with their relative spouts flanking one another.

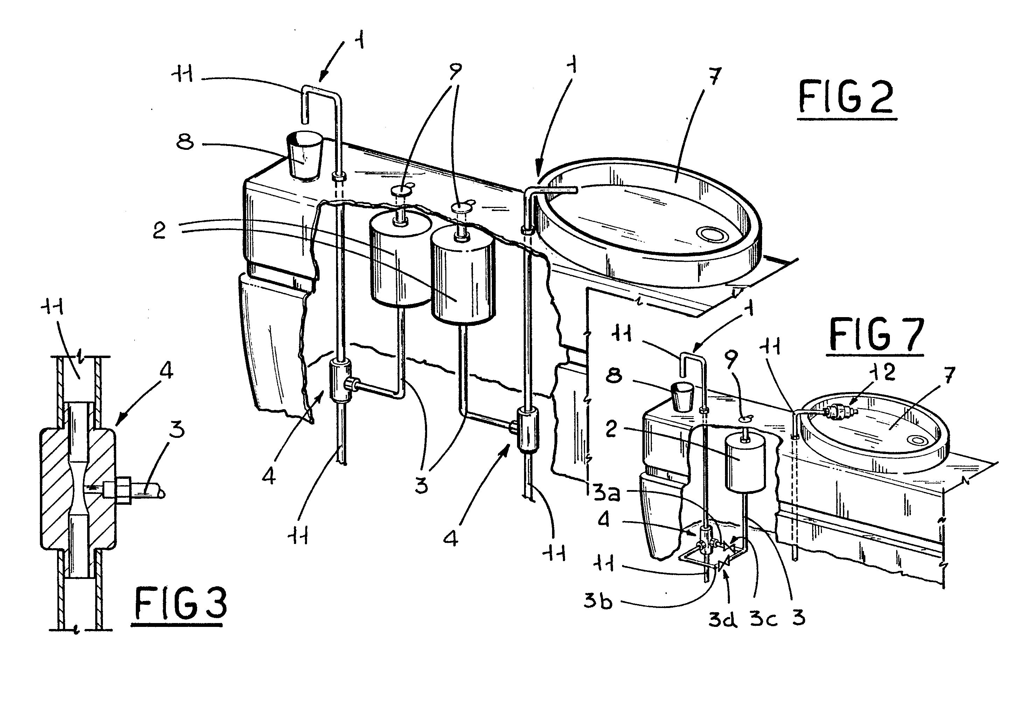

A simpler arrangement, however, would be one where the pipeline 3 is teed into the relative water line (as in fig 2) in such a way that it is the water line 11 itself, from the tee to the spout, through which the disinfectant and/or cleansing fluid is dispensed.

Means 4 by which the fluid is dispensed from the tank 2 into the relative pipeline 3 might consist in a pump installed on the pipeline, or an air pump designed to charge the tank 2 pneumatically, and thus subject the supply of fluid to pressure such as will urge it into the relative pipeline 3. 10 denotes a valve installed on the water supply line 11 to each outlet 1; in order to ensure that the pump 4 and the outlet 1 are activated at one and the same moment, the means by which the pump 4 and the valve 10 are switched on will be one and the same.

In a preferred embodiment of the device shown in fig 2, the dispensing means consist in a Venturi duct installed along or at the end of the water supply line 11 to the outlet 1, into which the pipeline 3 from the tank is teed at the point of maximum restriction of the Venturi (fig 3). In this instance, means 5 for operation of the dispensing means are provided by the water passing through the Venturi 4; more exactly, in flowing through the restricted section, the water creates negative pressure by which the disinfectant and/or cleansing fluid is drawn into and mingled with the flow to the outlet 1. Such an expedient provides additional assurance that water and disinfectant and/or cleanser will flow to the outlet at one and the same time. The Venturi duct might also be an auxiliary component insertable along or applicable to the water supply line 11 at a given point. 6 denotes an on/off valve that might be installed on each pipeline 3 to the end of cutting off the flow of disinfectant in the event that water only is required.

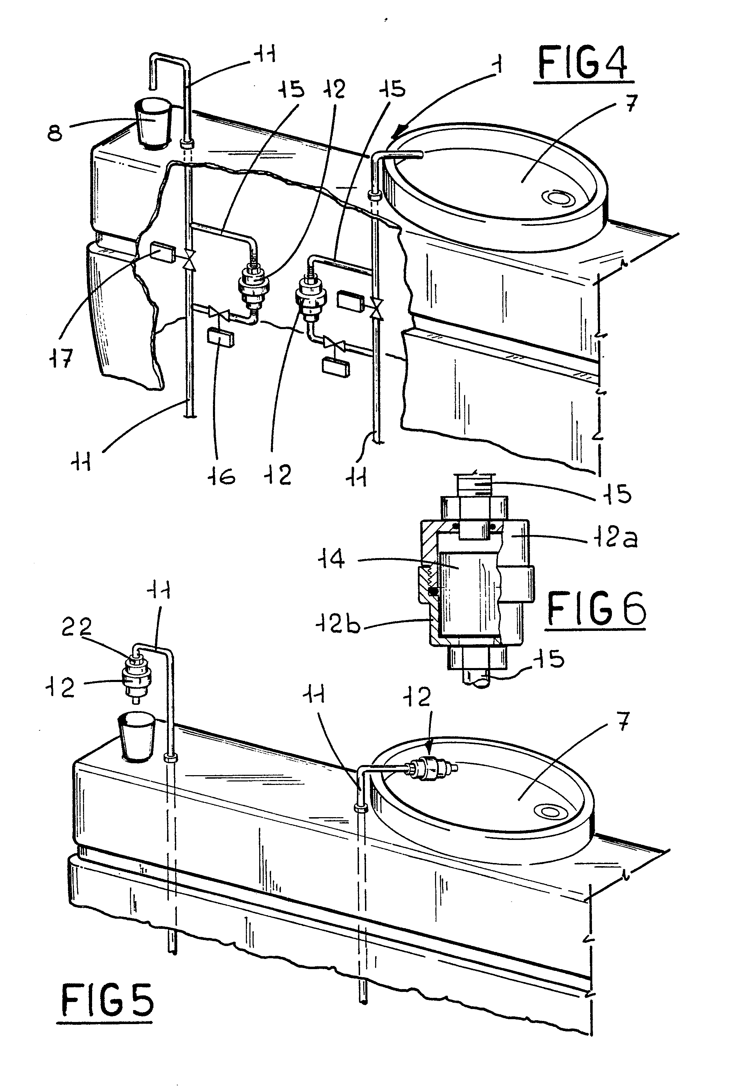

In the embodiment of fig 4, each device comprises a container 12 installed along the supply line 11 to the relative water outlet 1, which is designed to accommodate a slow-dissolving, solid disinfectant and/or cleansing product, or tablet 14 (see fig 6). Such a container 12 would be either of a type that can be opened, as in fig 4, to permit of renewing the spent tablet 14 with a replacement, or fastened to and removable from the water supply line 11 in one piece (fig 5) to permit of replacement en bloc once the tablet 14 is consumed.

In the example of fig 4, the container 12 is fitted to a secondary pipeline 15 installed in parallel with the water supply line 11, and embodied in two mutually connectable and separable parts 12a and 12b (fig 6) of which one, say, the top part 12a, is slidable along the secondary line 15 when separated from the bottom part 12b, thereby affording access to the inside of the container 12.

Provision can be made in such an embodiment for control means, consisting for example in metering valves 16 and 17, installed respectively on the secondary pipeline 15 and on the stretch of the water supply line 11 lying in parallel with the secondary pipeline 15. Means of this type would permit of varying the cross sectional area of the two lines 11 and 15 in order that the outlet may supply water only, or a mixture of untreated and treated water, according to the cross sections selected. To best advantage, the valve denoted 16 would also function as an on/off control capable of shutting off flow altogether through the secondary pipeline 15 in the event that water only happens to be required.

In the example of fig 5, the container 12 is fitted to the outlet 1 of the water line 11 directly at the spout, facilitating removal and replacement to the maximum; with this arrangement, moreover, no modification whatever is required to the existing structure of the surgery apparatus, and the device becomes a simple accessory provided with suitable means 22 (a push-pull or screw type fastener, etc.) for its attachment to the spout.

The tablet 14 or the fluid contained in the tanks 2 might be tinted in such a way that when dissolved in the water, its active presence can be readily observed; where no colour is discernible, this will signify the need for replacement or replenishment. What is more, by adopting different colours for the individual solids or fluids dispensed to the single outlets, it becomes possible to allocate a given disinfectant and/or cleanser to a given outlet 1, notwithstanding the identical appearance of the tanks 2 or the containers 12. For example, the product utilized for the spittoon 7 might be both disinfectant and cleanser, whilst that dispensed into the water for the oral rinse drinking glass 8 could contain one or more isotonic, anaesthetic, and/or disinfectant substance/s, etc. To advantage, the product dispensed to the spittoon will contain substances capable of preventing encrustations attributable to salts of calcium and magnesium in the water supply.

At all events, the products in question can be procured in all such combinations of properties as may be considered necessary to the application for which the device is intended.

As the drawings clearly demonstrate, the flow of disinfectant and/or cleanser into the water is continuous, and 'continuous' in this context can signify either continuity proper, or a regular pulsed flow produced by a suitable device, equally capable of ensuring a steady supply of treated water to the outlets 1.

Needless to say, mixed embodiments of the device are also possible, inasmuch as one might utilize a fluid for the rinse glass, dispensed from a tank, and a container with the slow-dissolving tablet for the spittoon, or viceversa.

Such an embodiment is illustrated in fig 7, where the outlet 1 serving the spittoon cup 7 is served from a container 12 with the solid tablet 14, as in fig 5, and the outlet 1 for the drinking glass 8 from a tank 2 of fluid, as in fig 2.

In this embodiment, furthermore, the dispensing means 4 are of the Venturi type, into which two pipelines 3a and 3b of dissimilar bore from the tank 2 are directed, the two lines being controlled by respective valves 3c and 3d; accordingly, it becomes possible to dispense the disinfectant and/or cleansing fluid into the water supply at two different flow rates. The valves 3c and 3d might operate in pulsed yet continuous manner, in such a way as to ensure that the water emerging from the outlet 1 is continuously treated notwithstanding the intermittent dispensing mode. Again, the two valves 3c and 3d will be capable of shutting off entirely, in such a way as to obtain untreated water from the relative outlet 1 as and when appropriate, similarly to the case of fig 4.

## Claims

1) A device for supplying a disinfectant and/or cleansing fluid automatically and continuously to the water outlets of dental surgery apparatus, characterized
in that it comprises, for each water outlet (1), means by which to supply a disinfectant and/or cleansing agent in such a way that it will emerge continuously, together with the water, at a point adjacent to or coinciding with the spout of the relative outlet (1).

2) A device as in claim 1, wherein means by which to supply the disinfectant and/or cleanser comprise:
-a tank (2) containing a disinfectant and/or cleansing fluid;
-at least one pipeline (3) departing from the relative tank (2), through which the fluid is dispensed, of which at least the terminal section is associated with the respective outlet (1);
-means (4) by which the fluid is dispensed from each tank (2) into the relative pipeline (3);
-means (5) by which the dispensing means (4) are caused to operate simultaneously with the relative water outlet (1).

3) A device for supplying a disinfectant and/or cleansing fluid automatically and continuously to the water outlets of dental surgery apparatus, characterized
in that it comprises, for each water outlet (1): -a tank (2) containing a disinfectant and/or cleansing fluid;
-at least one pipeline (3) departing from the relative tank (2), through which the fluid is dispensed, of which at least the terminal section is associated with the respective outlet (1);
-means (4) by which the fluid is dispensed from each tank (2) into the relative pipeline (3);
-means (5) by which the dispensing means (4) are caused to operate simultaneously with the relative water outlet (1).

4) A device for supplying a disinfectant and/or cleansing fluid automatically and continuously to the water outlets of dental surgery apparatus, characterized
in that it comprises, for a first water outlet (1):
-a tank (2) containing a disinfectant and/or cleansing fluid;
-at least one pipeline (3) departing from the relative tank (2), through which the fluid is dispensed, of which at least the terminal section is associated with the respective outlet (1);
-means (4) by which the fluid is dispensed from each tank (2) into the relative pipeline (3);
-means (5) by which the dispensing means (4) are caused to operate simultaneously with the relative water outlet (1);
and for a second outlet (1):
a container (12), installed on the pipeline (11) carrying water to the second outlet, and serving to accommodate a slow-dissolving solid disinfectant and/or cleanser (14) invested by the water flowing through the pipeline (11).

5) A device as in claim 2, 3, or 4, wherein the pipeline (3) from the tank is embodied separately from the relative water outlet (1) and terminates at a point in close proximity to the spout of the outlet.

6) A device as in claim 2, 3 or 4, wherein the pipeline (3) from the tank is a pipeline directed into the relative water outlet at a point upstream of the spout.

7) A device as in claim 2, 3 or 4, wherein dispensing means (4) consist in a pump installed on the relative pipeline (3) from the tank (2).

8) A device as in claim 2, 3 or 4, wherein dispensing means (4) consist in a pump connected to the outlet of the tank (2).

9) A device as in claim 2, 3 or 4, wherein dispensing means consist in an pneumatic pump discharging air into the tank (2).

10) A device as in claim 2, 3 or 4, wherein dispensing means (4) consist in a Venturi duct installed on the pipeline (11) carrying water to the relative outlet (1), into which the pipeline (3) from the tank (2) is connected at the point of maximum restriction of the duct, and operating means (5) are provided by the flow of untreated water to the outlet (1), into which the disinfectant and/or cleansing fluid is drawn by negative pressure generated through the restriction of the Venturi.

11) A device as in claim 2, 3 or 4, comprising on/off means (6) installed on the pipeline (3) from the tank and activated independently of the operating means (5) and the dispensing means (4).

12) A device as in claim 1, wherein dispensing means comprise a container (12), installed on the pipeline (11) carrying water to the second outlet, and serving to accommodate a slow-dissolving solid disinfectant and/or cleanser (14) invested by the water flowing through the pipeline (11).

13) A device as in claim 4 or 12, wherein the container (12) can be opened up so as to permit of renewing the solid preparation (14) with a replacement when consumed.

14) A device as in claim 4 or 12, wherein the container (12) is fitted to the relative water pipeline (11) in separable fashion so as to permit of renewing the solid preparation (14) with a replacement when consumed.

15) A device as in claim 4 or 12, wherein the container (12) is installed on a secondary pipeline (15) connected in parallel with the water pipeline (11), and flow through the parallel sections of the pipelines (11, 15) is controlled by respective means (17, 16) of variable cross sectional area.

16) A device as in claim 4 or 12, wherein the container (12) is located at the spout of the outlet served by the relative water pipeline (11) and comprises means (22) for its attachment thereto.

17) A device as in claim 2, 3, 4 or 12, wherein the disinfectant and/or cleansing agent relative to each outlet is tinted, to the ends of verifying disinfection while colour remains visible, and of indicating the empty state of the tank (2) or container (12) when colour is no longer visible.

18) A device as in claim 2, 3, 4 or 12, wherein the individual agents supplied to the single outlets (1) are tinted with dissimilar colours.

19) A device as in claim 4 or 12, wherein the solid disinfectant and/or cleanser (14) contains substances capable of preventing encrustations attributable to salts of calcium and magnesium in the water supply.

20) A device as in claim 4, comprising:
-a tank (2) connected to a pipeline (11) supplying water to an oral rinse drinking glass (8) by way of the one outlet (1);
-a container (12) fitted to the spout of the other outlet (1), from which water is supplied to a spittoon cup (7);
-dispensing means (4) embodied as a Venturi duct installed on the pipeline (11) to the drinking glass outlet (1), into which the pipeline (3) from the tank is connected at the point of maximum restriction of the duct;
wherein operating means (5) are provided by the flow of untreated water to the relative outlet (1), into which the disinfectant and/or cleansing fluid is drawn by negative pressure generated through the restricted section of the Venturi duct, and the container (12) can be opened up in such a way as to permit of renewing the solid preparation (14) with a replacement when consumed.

21) A device as in claim 1, wherein the pipeline (3) from the tank (2) is branched into at least two sections (3a, 3b), connected individually into the point of maximum restriction of the Venturi duct and provided with respective means (3c, 3d) of controlling and/or shutting off flow.

# FIG 1

EP 0 353 207 A2

FIG 2

FIG 3

FIG 7

EP 0 353 207 A2

EP 0 353 207 A2

FIG 4

FIG 6

FIG 5